# EUROPÄISCHE PATENTSCHRIFT

(11) **EP 0 889 449 B1**
(45) Veröffentlichungstag und Bekanntmachung des Hinweises auf die Patenterteilung: **31.07.2002**
(21) Anmeldenummer: 98108129.2
(22) Anmeldetag: 05.05.1998
(51) Int. Cl.: G07F 7/10, G06K 7/00

(54) **Integriertes Zahlungsmodul für ein Terminal**
Integrated payment module for a terminal
Module de paiement intégré pour un terminal

(30) Priorität: 01.07.1997 DE 19728011
(43) Veröffentlichungstag der Anmeldung: 07.01.1999
(73) Patentinhaber: International Business Machines Corporation, Armonk, N.Y. 10504 (US)
(72) Erfinder: Bublitz, Hermann R., 71034 Böblingen (DE); Newth, Adam R., Putney, London, SW15 2NJ (GB)
(74) Vertreter: Teufel, Fritz, Dipl.-Phys.

(56) Entgegenhaltungen:
- EP-A- 0 348 932
- EP-A- 0 355 372
- DE-A- 19 522 527
- US-A- 5 036 461
- US-A- 5 352 875

## Beschreibung

Die Erfindung betrifft ein integriertes Modul für ein Zahlungsterminal, wobei das Zahlungsterminal Komponenten aufweist, wobei jede der Komponenten einer Klasse von Komponenten, insbesondere einer Klasse von Kartenlesern, einer Klasse von Tastaturen und einer Klasse von Anzeigeeinheiten, zuordenbar ist, wobei bei einer Nutzung des Zahlungsterminals durch einen Benutzer Protokolle zur Ausführung von Anwendungen des Zahlungsterminals ablaufen können, und wobei im Rahmen des Ablaufs der Protokolle die Komponenten nutzbar sind.

Moderne Arten des bargeldlosen Zahlungsverkehrs werden mit Hilfe von Chipkarten durchgeführt. Es gibt verschiedene Arten des bargeldlosen Zahlungsverkehrs. Hierzu gehören insbesondere: elektronische Börsen, Kreditkarten und Debitkarten. Jede Art des bargeldlosen Zahlungsverkehrs hat zahlungsverkehrsspezifische Protokolle. Auch innerhalb einer Art, z.B. einer elektronischen Börse, sind verschiedene Protokolle zu finden.

Die Chipkarte wird vor der Herausgabe an den Kunden initialisiert, d. h. es werden Anwendungsdaten auf der Chipkarte eingebracht, die es erlauben, die Chipkarte im Rahmen bestimmter Anwendungen zu nutzen. Dem Kunden wird bei der Herausgabe der Chipkarte mitgeteilt, für welche Anwendungen seine Chipkarte nutzbar ist.

Möchte der Kunde im Laden eines Händlers eine Ware mit Hilfe seiner Chipkarte bezahlen, so ist diese Transaktion an einem POS-Terminal (Point-of-sale-Terminal) ausführbar.

Die Chipkarte wird in einen im POS-Terminal angeordneten Chipkartenleser eingesteckt. Mit Hilfe des Chipkartenlesers können Daten von der Chipkarte gelesen werden oder Daten auf die Chipkarte geschrieben werden. Insbesondere wird bei einer elektronischen Börsenanwendung das auf der Chipkarte gespeicherte Guthaben um den Betrag verringert, welcher für die Ware beim Händler zu zahlen ist. Es verbleibt ein Restguthaben auf der Chipkarte. Bei einer Kreditkartenanwendung wird mit Hilfe des Chipkartenlesers eine Authorisierung ausgeführt.

Ein entsprechendes Zahlungsterminal ist beispielsweise in US 5,036,461 beschrieben. Es ermöglicht die Verwendung unterschiedlicher Kartentypen, wie Chipkarten und herkömmlichen Kreditkarten mit Magnetstreifen. Dementsprechend ist es ausgerüstet mit Kartenlesern für die genannten Karten, sowie Tastatur, Anzeigeeinheit und Druckereinheit. Um den unterschiedlichen Sicherheitsverfahren der verschiedenen Finanzdienstleister gerecht zu werden, können mehrere Programm-Module in dem Zahlungsterminal untergebracht werden. Diese steuern die sicherheitsrelevanten Prozesse bei Zahlungstransaktionen, welche beispielsweise von einer Chipkarte initiiert werden.

Zur Ausführung der verschiedenen Zahlungsvorgänge weist ein POS-Terminal in der Regel folgende Komponenten auf: den genannten Chipkartenleser, ein Tastaturfeld zur Eingabe von Daten, eine Anzeigeeinheit zur Anzeige von Anweisungen an den Kunden, ein Sicherheitsmodul, wenn eine elektronische Börse unterstützt wird, und eine Kommunkationsverbindung zu einem Hostsystem, insbesondere, wenn Kredit- und/oder Debitkarten unterstützt werden.
Die konkrete Ausführung eines Zahlungsvorganges unter Einbeziehung dieser Komponenten hängt von der gerätespezifischen Ausbildung der Komponenten ab. Sind in zwei POS-Terminals Chipkartenleser zweier verschiedener Hersteller eingebaut, so unterscheidet sich der konkrete Ablauf eines Zahlungsvorganges in dem einen POS-Terminal vom konkreten Ablauf eines Zahlungsvorganges in dem anderen POS-Terminal, auch wenn es sich in beiden Fällen um jeweils einen Zahlungsvorgang im Rahmen derselben Zahlungsverkehrsart handelt. Hieraus folgt, daß die Anwendungsprotokolle und die im Rahmen der Anwendungsprotokolle genutzten Funktionen und Prozeduren, welche den Ablauf eines Zahlungsvorganges in einem POS-Terminal für eine bestimmte Zahlungsverkehrsart steuern, jeweils an die Konfigurierung des POS-Terminals angepaßt werden müssen, da der Informationsaustausch zwischen den Komoponenten von deren gerätespezifischer Ausbildung abhängt. Bei der Vielzahl der POS-Terminals, die im Rahmen einer elektronischen Börse bei Händlern aufgestellt werden, und die von verschiedenen Herstellern produziert werden, bedeutet dies einen sehr großen zeitlichen Aufwand zur Anpassung der Anwendungsprotokolle und Funktionen.

Aufgabe der vorliegenden Erfindung ist es deshalb, eine Möglichkeit zur flexiblen Nutzung von verschiedenen Zahlungsverkehrsarten in Terminals zu schaffen.

Diese Aufgabe wird erfindungsgemäß durch die in den unabhängigen Ansprüchen 1 und 8 offenbarte technische Lehre gelöst.

Der wesentliche Vorteil, welcher mit der Erfindung gegenüber dem Stand der Technik erreicht wird, besteht darin, daß Protokolle für den bargeldlosen Zahlungsverkehr in verschiedenen Terminals flexibel ausführbar sind, ohne an die gerätespezifische Ausbildung der mit dem Terminal verbunden Komponenten angepaßt werden zu müssen. Zeit- und kostenaufwendige Arbeit zur Anpassung der Protokolle und Funktionen an verschiedene Terminalausstattungen wird eingespart.

Ein weiterer Vorteil besteht darin, daß das Nachrüsten bereits genutzter Terminals mit einem neuen Protokoll oder neuen Funktionen schneller ausführbar ist, da das neue Protokoll oder die neuen Funktionen ebenfalls nicht in vielen verschiedenen Ausführungen, die jeweils an eine bestimmte Konfiguration eines Terminals angepaßt sind, hergestellt werden muß.

Bei einer zweckmäßigen Ausführung der Erfindung ist mittels den Funktionen ein Protokoll zum bargeldlosen Bezahlen ausführbar, wodurch POS-Terminals von verschiedenen Geldinstituten mit geringem Zeitaufwand mit den Funktionen verschiedener Kredit/Debitkartengesellschaften und verschiedener elektronischer Börsen ausrüstbar sind.

Vorteilhaft kann vorgesehen sein, daß die Protokolle ein Protokoll zur Ausführung eines Zahlungsvorganges mittels einer elektronischen Börse umfassen. Hierdurch wird die Integrierbarkeit neuer elektronischer Börsen in Terminals erleichtert.

Eine vorteilhafte Ausgestaltung der Erfindung sieht vor, daß das integrierte Modul in einem Speicher einer Steckkarte anordenbar ist, wobei die Steckkarte lösbar mit dem Zahlungsterminal verbunden ist. Hierdurch ist das integrierte Modul sehr leicht austauschbar. Dieser Vorteil wirkt sich insbesondere aus, wenn ein defektes integriertes Modul ausgetauscht werden soll oder ein verändertes integriertes Modul in ein Terminal eingebaut werden soll.

Eine zweckmäßige Weiterbildung der Erfindung sieht vor, daß in das integrierte Modul weitere Funktionen ladbar sind, wodurch im Verlauf der Lebensdauer eines integrierten Moduls verschiedene Funktionen in dem integrierten Modul anordenbar sind. Ein Austausch integrierter Module mit veralteten Funktionen ist somit nicht nötig.

Zweckmäßig weist das integrierte Modul ein Verzeichnis der Funktionen und/oder der weiteren Funktionen auf. Hierdurch ist der Datenaustausch zwischen dem integrierten Modul und dem Terminalmodul beschleunigbar, da ein schneller Zugriff auf eine Übersicht über die in dem integrierte Modul zur Verfügung gestellten Funktionen möglich ist.

Bei einer vorteilhaften Ausgestaltung der Erfindung umfassen die Funktionen kryptografische Funktionen zur Bearbeitung sicherheitsrelevanter Daten, wodurch vorteilhaft dem geforderten Sicherheitsstandard der Mehrzahl der bargeldlosen Zahlungsverfahren entsprochen wird. Mittels kryptographischer Funktionen sind insbesondere kryptographische Schlüssel zur Verschlüsselung und Entschlüsselung von Daten, die zwischen dem integrierten Modul und den Komponenten austauschbar sind, ausführbar.

Die abhängigen Verfahrensansprüche, für die entsprechende abhängige Vorrichtungsansprüche genannt wurden, weisen die im Zusammenhang mit den entsprechenden Vorrichtungsansprüchen genannten Vorteile auf.

Bei einer zweckmäßigen Ausführung der Erfindung übermittelt das Terminalmodul die zwischen dem integrierten Modul und den Komponenten ausgetauschten Informationen unverändert. Hierdurch wird der Datenaustausch beschleunigt, da das Terminalmodul keine Veränderung der Daten vornimmt, sondern diese unmittelbar weiterleitet.

Eine zweckmäßige Ausführung der Erfindung sieht das Vergeben einer Kennung an die Information, welche zwischen dem integrierten Modul und den Komponenten ausgetauscht werden, vor, wobei das Terminalmodul mit Hilfe der Kennung ermittelt, mit welcher der Komponenten das integrierte Modul die mit einer Kennung versehene Information austauscht. Mit Hilfe der Kennung können vorteilhaft nützliche Zusatzinformationen mit den zu übermittelten Informationen verbunden werden.

Eine zweckmäßige Weiterbildung der Erfindung sieht vor, daß beim Austauschen der Informationen zwischen dem integrierten Modul und den Komponenten sicherheitsrelevante Daten ausgetauscht werden, wodurch auch Protokolle ausführbar sind, in deren Rahmen personenbezogene, und damit sicherheitsrelevante Daten ausgetauscht werden.

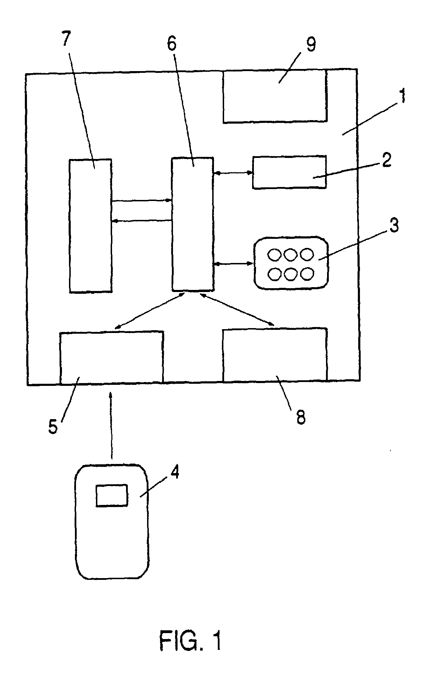

Die Erfindung wird im folgenden anhand einer Zeichnung näher erläutert.
Hierbei zeigt Fig. 1 eine schematische Darstellung eines Zahlungsterminals.

Gemäß Fig. 1 weist ein Zahlungsterminal 1 eine Anzeigeeinheit 2 und eine Tastatur 3 auf. Mit Hilfe der Anzeigeeinheit 2 werden einem Benutzer des Zahlungsterminals 1 Informationen angezeigt. Hierzu gehören insbesondere die Aufforderung, bestimmte Eingaben über die Tastatur 3 zu machen.

Das Zahlungsterminal 1 kann genutzt werden, um Kunden eines Händlers die Möglichkeit zu geben, bargeldlos, insbesondere im Rahmen einer elektronischen Börse, für Waren oder Dienstleistungen des Händlers zu zahlen. Hierfür kann das Zahlungsterminal 1 über ein Hostkommunikationsmodul 9 mit einem zentralen Netzwerk verbunden sein oder es kann als off-line-Gerät ausgebildet sein.
Wird mit dem Zahlungsterminal 1 ein bargeldloser Zahlungsvorgang ausgeführt, so wird auf der Anzeigeeinheit 2 beispielsweise der Betrag angezeigt, welcher von dem Kunden zu zahlen ist. Mittels der Tastatur 3 kann der Zahlungstyp ausgewählt werden, und der zu zahlende Betrag kann eingegeben und bestätigt werden.

Zur Steuerung des Zahlungsterminals 1 im Rahmen einer Benutzung durch den Kunden weist das Zahlungsterminal 1 ein Terminalmodul 6, welches im wesentlichen als ein Software-Modul ausgebildet ist, auf. Das Terminalmodul 6 ist im Speicher einer Recheneinheit des Zahlungsterminals 1 angeordnet und wird von einem Prozessor der Recheneinheit zur Ausführung der Anwendungen genutzt. Das Terminalmodul 6 tauscht hierbei mit den verschiedenen Komponenten des Zahlungsterminals 1, insbesondere mit der Anzeigeeinheit 2, der Tastatur 3, einem Kartenleser 5, einem Sicherheitsmodul 8 und einem Hostkommunikationsmodul 9 Informationen aus. Beispielsweise dient der Informationsaustausch zwischen der Tastatur 3 und dem Terminalmodul 6 dazu, die über die Tastatur 3 durch den Kunden eingegebenen Daten zu verarbeiten.
Desweiteren werden zwischen dem Terminalmodul 6 und dem Kartenleser 5 Informationen ausgetauscht, um Daten von einer in den Kartenleser 5 eingeführten Chipkarte 4 zu lesen oder um Daten auf die Chipkarte 4 zu schreiben.

Möchte ein Kunde mit Hilfe seiner elektronischen Börse oder einer anderen bargeldlosen Zahlungsverkehrsart, die auf der Chipkarte 4 eingebracht ist, bezahlen, gibt der Händler den zu zahlenden Betrag mittels der Tastatur 3 ein. Das Terminalmodul 6 führt mit Hilfe der Recheneinheit die zum Lesen der Eingabe notwendigen Verfahrensschritte aus. Anschließend wählt der Händler mit Hilfe der Tastatur 3 die gewünschte Zahlungsart, beispielsweise die Zahlung mit einer elektronischen Börse, aus. Das Terminalmodul 6 setzt den Kartenleser 5 in einen Zustand, in welchem dieser das Einführen einer Chipkarte erwartet. Nachdem die Chipkarte 4 in den Kartenleser 5 eingeführt wurde und ein korrekter Kontakt zwischen der Chipkarte 4 und dem Kartenleser 5 hergestellt wurde, sendet der.Kartenleser 5 eine dementsprechende Information an das Terminalmodul 6. Diese Information enthält weiterhin eine Angabe über den Typ der Chipkarte 4.

Anschließend ist ein Zahlungsprotokoll auszuführen, im Rahmen dessen der zu zahlende Betrag von der elektronischen Börse auf der Chipkarte 4 abgebucht wird und der abgebuchte Betrag im Zahlungsterminal 1 gespeichert wird, so daß der Händler diesen Betrag später vom elektronischen Börsenkonto überwiesen bekommt. Für elektronische Börsen verschiedener Anbieter können verschiedene Zahlungsprotokolle gelten. Die Zahlungsprotokolle können sich hierbei sowohl in der Reihenfolge der auszuführenden Schritte als auch in der Art der auszuführenden Schritte unterscheiden.

Um ein Zahlungsprotokoll zu beginnen, sendet das Terminalmodul 6 eine Aufforderung an ein Zahlungsmodul 7, welches im wesentlichen als Software-Modul ausgebildet ist. Das Zahlungsmodul 7 umfaßt Funktion, die im Rahmen des Zahlungsprotokolls auszuführen sind. Mit Hilfe der Funktionen tauscht das Zahlungsmodul 7 Informationen mit den Komponenten des Zahlungsterminals 1 aus. Der Informationsaustausch dient dazu, an den Komponenten Arbeitsschritte auszuführen und die Ergebnisse dieser Arbeitsschritte von den Komponenten zum Zahlungsmodul 7 zu übermitteln. Hierzu gehören beispielsweise das Lesen von Daten von der Chipkarte 4 mit Hilfe des Kartenlesers 5 und die Übermittlung der gelesenen Daten zum Zahlungsmodul 7.

Zur Ausführung der Funktionen ist es nicht notwendig, daß das Zahlungsmodul 7 Kenntnis von der gerätespezifischen Ausbildung der Komponenten hat. So ist die Funktion, mittels der eine Aufforderung zum Lesen von Daten von der Chipkarte 4 durch den Kartenleser 5 ausgeführt wird, unabhängig vom speziellen Typ des Kartenlesers 5. Die Auswahl einer der in dem Zahlungsmodul 7 gespeicherten Funktionen hängt somit nur davon ab, welche Aktion mit welcher Klasse von Komponenten auszuführen ist. Eine Klasse von Komponenten umfaßt Geräte, die eine vorgegebene Aufgabe erfüllen können. Beispielhaft sind die Klasse der Kartenleser, die Klasse der Anzeigeeinheiten und die Klasse der Tastaturen zu nennen.

Nachdem das Zahlungsmodul 7 von dem Terminalmodul 6 eine Aufforderung zum Beginn eines Zahlungsprotokolls für einen Zahlungsvorgang mittels einer elektronischen Börse erhalten hat, werden mit Hilfe der Funktionen Verfahrensschritte zum Öffnen der elektronischen Börse auf der Chipkarte 4 ausgeführt. Hierbei wird das Hauptverzeichnis der Chipkarte 4 gelesen und das Unterverzeichnis, in welchem die elektronische Börse gespeichert ist, ausgewählt.
Das Zahlungsmodul 7 kommuniziert hierbei nicht direkt mit der Chipkarte 4. Die Kommunikation wird stets unter Einbeziehung des Terminalmoduls 6 ausgeführt. Jede von dem Zahlungsmodul 7 ausgesendete Aufforderung zur Ausführung einer Aktion, beispielsweise das Lesen des Hauptverzeichnisses der Chipkarte 4, wird von dem Zahlungsmodul 7 an das Terminalmodul 6 gesendet. Die vom Zahlungsmodul 7 ausgesendete Aufforderung umfaßt eine Kennung, die dem Terminalmodul 6 mitteilt, an welche Komponente des Zahlungsterminals 1 die Aufforderung weiterzuleiten ist. Soll das Hauptverzeichnis der Chipkarte gelesen werden, so zeigt die Kennung an, daß diese Aufforderung an den Kartenleser 5 weiterzuleiten ist. Die Antwort des Kartenlesers 5 wird, nachdem das Hauptverzeichnis gelesen wurde, an das Terminalmodul 6 gesendet und das Terminalmodul leitet diese weiter zum Zahlungsmodul 7. Das Zahlungsmodul 7· und die Komponenten des Zahlungsterminals 1 kommunizieren somit auf einem indirekten Weg.

Ist die elektronische Börse auf der Chipkarte 4 geöffnet, so teilt das Zahlungsmodul 7 dieses dem Terminalmodul 6 mit. Das Terminalmodul 6 initiiert den folgenden Verfahrensschritt zum Abbuchen des zu zahlenden Betrages. Hierzu wird von dem Terminalmodul 6 eine Aufforderung an das Zahlungsmodul 7 gesendet. Das Zahlungsmodul 7 kennt den Typ der Chipkarte 4 und führt auf der Basis dieser Kenntnis die zur Abbuchung notwendigen Schritte aus. Der exakte Ablauf dieser Schritte kann für Kartentypen, die sich unterscheiden, verschieden sein. Das Zahlungsmodul 7 wählt in Abhängigkeit von dem Kartentyp der Chipkarte 4 die notwendigen Funktionen aus.
Die Abbuchung wird von dem Zahlungsmodul 7 initiiert und umfaßt einen Informationsaustausch zwischen der Chipkarte 4 und dem Sicherheitsmodul 8. Dieser Informationsaustausch weist die folgende Sequenz von Schritten auf:
- Senden einer Aufforderung zur Initialisierung der elektronischen Börse von dem Sicherheitsmodul 8 an die Chipkarte 4,
- Senden einer Antwort über den Vollzug der Initialisierung von der Chipkarte 4 an das Sicherheitsmodul 8,
- Initialisieren des Sicherheitsmoduls 8 für die Abbuchung,
- Abbuchen des Zahlbetrages von der Chipkarte 4,
- Gutschreiben des Zahlbetrages im Sicherheitsmodul 8, und
- Beenden der Abbuchung.

Das Sicherheitsmodul 8 sendet anschließend eine Information an das Zahlungsmodul, aus welcher hervorgeht, daß der Abbuchungsvorgang beendet ist. Diese Information, welche wiederum mit einer Kennung versehen ist, wird zunächst vom Sicherheitsmodul 8 an das Terminalmodul 6 gesendet. Das Terminalmodul 6 entnimmt der Kennung, daß die Information an das Zahlungsmodul weiterzuleiten ist, und führt das Weiterleiten aus.
Am Ende des Zahlungsvorganges teilt das Zahlungsmodul 7 dem Terminalmodul 6 mit, daß der Vorgang abgeschlossen ist.

Bei der Ausführung der Verfahrensschritte zur Abbuchung des zu zahlenden Betrages von der Chipkarte 4 wird ein Sicherheitsmodul 8 benutzt, um sicherheitsrelevante Daten auszutauschen und um einen Mißbrauch der Börse zu verhindern. Im Sicherheitsmodul 8 sind ausführbare Funktionen und Prozeduren gespeichert, mit deren Hilfe die Abbuchung des Zahlbetrages von der elektronischen Börse der Chipkarte 4 vollzogen werden kann.

Der gesamte Ablauf des Zahlungsvorganges ist in der folgende Sequenz von Schritten zusammenfaßbar:
1. Das Terminalmodul 6 sendet eine Nachricht zur Durchführung einer Zahlung an das Zahlungsmodul 7. Diese Nachricht umfaßt im wesentlichen die folgenden Daten: Betrag, Währung, Zahlungsart (Börse, Kredit, Debit) falls erwünscht.
2. Das Zahlungsmodul 7 sendet eine Nachricht zur Initialisierung des Sicherheitsmoduls 8 an das Terminalmodul (Ziel: Sicherheitsmodul 8, Inhalt: Initialisierungsdaten).
3. Das Terminalmodul 6 dekodiert das Ziel und sendet die Nachricht an das Sicherheitsmodul 8.
4. Das Sicherheitsmodul 8 antwortet dem Terminalmodul 6 mit Daten zur Initialisierung der elektronischen Börse auf der Chipkarte 4.
5. Das Terminalmodul 6 sendet die Antwort an das Zahlungsmodul 7. (Schritte 2. bis 5. können mehrmals wiederholt werden abhängig vom Protokoll des Sicherheitsmoduls 8.)
6. Das Zahlungsmodul 7 komplettiert die Initialisierungsdaten und sendet eine Nachricht zur Initialisierung der Chipkarte 4 an das Terminalmodul 6.
7. Das Terminalmodul 6 dekodiert das Ziel und sendet die Nachricht an die Chipkarte 4.
8. Die Chipkarte 4 antwortet dem Terminalmodul 6 mit Daten den Vollzug der Initialisierung.
9. Das Terminalmodul 6 sendet die Antwort an das Zahlungsmodul 7. (Schritte 6. bis 9. können mehrmals wiederholt werden, abhängig vom Chipkartenprotokoll.)
10. Das Zahlungsmodul 7 komplettiert die Daten und sendet sie an das Terminalmodul 6 mit dem Ziel Sicherheitsmodul 8.
11. Das Terminalmodul 6 dekodiert das Ziel- und sendet die Nachricht an das Sicherheitsmodul 8.
12. Das Sicherheitsmodul initialisiert sich für die Abbuchung und antwortet mit einer Vollzugsmeldung.
13. Das Terminalmodul 8 sendet die Antwort an das Zahlungsmodul 7. (Schritte 10. bis 13. können mehrmals wiederholt werden, abhängig vom Protokoll des Sicherheitsmoduls 8.)
14. Das Zahlungsmodul 7 erzeugt eine Nachricht an die Chipkarte 4 zur Abbuchung des Betrags und sendet sie an das Terminalmodul 6.
15. Das Terminalmodul 6 dekodiert das Ziel und sendet die Nachricht an die Chipkarte 4.
16. Die Chipkarte 4 antwortet mit einer Vollzugsmeldung.
17. Das Terminalmodul 6 sendet die Antwort an das Zahlungsmodul 7. (Schritte 14. bis 17. können mehrmals wiederholt werden abhängig vom Chipkartenprotokoll.)
18. Das Zahlungsmodul 7 erzeugt eine Nachricht zur Gutschrift des Betrages in dem Sicherheitsmodul 8 und sendet sie an das Terminalmodul 6.
19. Das Terminalmodul 6 dekodiert das Ziel und sendet die Nachricht an das Sicherheitsmodul 8.
20. Das Sicherheitsmodul 8 führt die Gutschrift durch und antwortet mit einer Vollzugsmeldung.
21. Das Terminalmodul 6 sendet die Antwort an das Zahlungsmodul 7. (Schritte 18. bis 21. können mehrmals wiederholt werden, abhängig vom Protokoll des Sicherheitsmoduls 8.)
22. Das Zahlungsmodul 7 sendet eine Nachricht an das Terminalmodul 6, daß der Zahlungsvorgang beendet ist.

Das Zahlungsmodul 7 ist in einem Speicher, welcher mit einem Prozessor in der Recheneinheit des Zahlungsterminals 1 verbunden ist, gespeichert. Alternativ kann das Zahlungsmodul 7 im Speicher einer Steckkarte angeordnet sein. Diese Ausführung hat den Vorteil, das die Steckkarte lösbar mit dem Zahlungsterminal 1 verbindbar ist. Das Terminalmodul 7 kann hierdurch mit geringem Aufwand ausgetauscht werden.
Es kann vorgesehen sein, daß das Zahlungsmodul in einem Speicher eines 'Read-Only'-Moduls angeordnet ist, wobei das 'Read-Only'-Modul lösbar mit dem Zahlungsterminal 1 verbunden ist.

Die in dem Terminalmodul 7 gespeicherten Funktionen können durch weitere Funktionen ergänzt werden, wodurch mit dem Zahlungsterminal 1 neue oder erweiterte Zahlungsprotokolle ausführbar sind. Vorteilhaft weist das Zahlungsmodul 7 ein Verzeichnis der im Zahlungsmodul 7 gespeicherten und im Rahmen eines Protokolls ausführbaren Funktionen auf.

### BEZUGSZEICHENLISTE

- 1: Zahlungsterminal
- 2: Anzeigeeinheit
- 3: Tastatur
- 4: Chipkarte mit elektronischer Börse
- 5: Kartenleser
- 6: Terminalmodul
- 7: Zahlungsmodul
- 8: Sicherheitsmodul
- 9: Hostkommunikationsmodul

## Patentansprüche

1. Integriertes Modul für ein Zahlungsterminal, wobei das Zahlungsterminal Komponenten aufweist, wobei jede der Komponenten einer Klasse von Komponenten, insbesondere einer Klasse von Kartenlesern, einer Klasse von Tastaturen und einer Klasse von Anzeigeeinheiten, zuordenbar ist, wobei bei einer Nutzung des Zahlungsterminals durch einen Benutzer Protokolle zur Ausführung von Anwendungen des Zahlungsterminals ablaufen können, und wobei im Rahmen des Ablaufs der Protokolle die Komponenten nutzbar sind,
**dadurch gekennzeichnet,**
**daß** beim Ablauf der Protokolle ein indirekter Informationsaustausch zwischen dem integrierten Modul (7) und den Komponenten ausführbar ist, wobei zur Ausführung des indirekten Informationensaustausches ein direkter Informationsaustausch zwischen dem integrierten Modul (7) und einem in dem Zahlungsterminal (1) angeordneten Terminalmodul (6), welches als software-Modul ausgeführt ist, und zwischen dem Terminalmodul (6) und den Komponenten ausgebildet ist,
**daß** der direkte Informationsaustausch zwischen dem integrierten Modul (7) und dem Terminalmodul (6) mit Hilfe von ausgewählten Funktionen, die in dem integrierten Modul (7) gespeichert sind, ausführbar ist, wobei die Auswahl der Funktionen davon abhängig ist, welches der Protokolle abläuft, und wobei die Auswahl der Funktionen unabhängig von einer spezifischen Ausbildung der Komponenten ist, die einer Klasse von Komponenten zugeordneten sind.

2. Integriertes Modul nach Anspruch 1,
**dadurch gekennzeichnet, daß**
mittels den Funktionen ein Protokoll zum bargeldlosen Bezahlen ausführbar ist.

3. Integriertes Modul nach Anspruch 1 oder 2,
**dadurch gekennzeichnet, daß**
die Protokolle ein Protokoll zur Ausführung eines Zahlungsvorganges mittels einer elektronischen Börse umfassen.

4. Integriertes Modul nach Anspruch 1,
**dadurch gekennzeichnet, daß**
das integrierte Modul (7) in einem Speicher auf einer Steckkarte gespeichert ist, wobei die Steckkarte lösbar mit dem Zahlungsterminal (1) verbunden ist.

5. Integriertes Modul nach Anspruch 1,
**dadurch gekennzeichnet, daß**
in das integrierte Modul (7) weitere Funktionen ladbar sind.

6. Integriertes Modul nach Anspruch 1 oder 5,
**dadurch gekennzeichnet, daß**
das integrierte Modul (7) ein Verzeichnis der Funktionen und/oder der weiteren Funktionen aufweist.

7. Integriertes Modul nach Anspruch 1,
**dadurch gekennzeichnet, daß**
die Funktionen kryptografische Funktionen zur Bearbeitung sicherheitsrelevanter Daten umfassen.

8. Verfahren zur Ausführung einer Anwendung, insbesondere eines bargeldlosen Zahlungsvorganges, in einem Zahlungsterminal, wobei das Zahlungsterminal Komponenten aufweist, wobei jede der Komponenten einer Klasse von Komponenten, insbesondere einer Klasse von Kartenlesern, einer Klasse von Tastaturen und einer Klasse von Anzeigeeinheiten, zuordenbar ist, wobei das Zahlungsterminal ein Terminalmodul aufweist, wobei in dem Zahlungsterminal Protokolle ablaufen, und wobei im Rahmen des Ablaufs der Protokolle die Komponenten genutzt werden,
**gekennzeichnet durch** die folgenden Verfahrensschritte:
a) Senden einer Aufforderung von dem Terminalmodul (6), welches als Software-Modul ausgeführt ist an ein integriertes Modul (7), um die Ausführung eines Protokolls zu beginnen,
b) Austauschen von Informationen zwischen dem integrierten Modul (7) und den Komponenten, wobei die Informationen hierbei zwischen dem integrierten Modul (7) und dem Terminalmodul (6) und zwischen dem Terminalmodul (6) und den Komponenten ausgetauscht werden, wobei die Informationen zwischen dem integrierten Modul (7) und dem Terminalmodul (6) mittels ausgewählter Funktionen, die in dem integrierten Modul (7) gespeichert sind, ausgetauscht werden, und wobei die Auswahl der Funktionen davon abhängig ist, welches der Protokolle abläuft, und wobei die Auswahl der Funktionen unabhängig von einer spezifischen Ausbildung der Komponenten ist, die einer Klasse von Komponenten zugeordneten sind.

9. Verfahren nach Anspruch 8,
**dadurch gekennzeichnet, daß**
das Terminalmodul (6) die zwischen dem integrierten Modul (7) und den Komponenten ausgetauschten Informationen unverändert übermittelt.

10. Verfahren nach Anspruch 8,
**gekennzeichnet durch** den weiteren Verfahrensschritt:
d) Vergeben einer Kennung an die Information, welche zwischen dem integrierten Modul (7) und den Komponenten ausgetauscht wird, wobei das Terminalmodul (6) mit Hilfe der Kennung ermittelt, mit welcher der Komponenten das integrierte Modul (7) die mit einer Kennung versehene Information austauscht.

11. Verfahren nach Anspruch 8,
**dadurch gekennzeichnet, daß**
beim Austauschen der Informationen zwischen dem integrierten Modul (7) und den Komponenten sicherheitsrelevante Daten ausgetauscht werden.

12. Verfahren nach Anspruch 8,
**dadurch gekennzeichnet, daß**
im Rahmen des Austausches der Informationen zwischen dem integrierten Modul (7) und den Komponenten sicherheitsrelevante kryptografische Funktionen ausgeführt werden.

## Claims

1. An integrated module for a payment terminal, wherein the payment terminal has components, wherein each of the components can be assigned to a class of components, more particularly a class of card scanners, a class of keyboards, and a class of display units, wherein protocols for the execution of applications of the payment terminal can be performed when a user uses the payment terminal, and wherein the components can be used by the performed protocols,
**characterized in that**
in the execution of the protocols, an indirect information exchange between the integrated module (7) and the components can be executed, wherein for the execution of the indirect information exchange a direct information exchange can be executed between the integrated module (7) and a terminal module (6) located in the payment terminal (1), wherein the terminal module is designed as a software module, and between the terminal module (6) and the components, and **in that** the direct information exchange between the integrated module (7) and the terminal module (6) can be executed using selected functions, which are stored in the integrated module (7), wherein the selection of the functions depends on which one of the protocol is executed, and wherein the selection of the functions is independent of a specific design of the components belonging to a class of components.

2. An integrated module according to claim 1,
**characterized in that**
a protocol for cash-less payment can be executed by the functions.

3. An integrated module according to claim 1 or 2,
**characterized in that**
the protocols contain a protocol for the execution of a payment process using an automated exchange.

4. An integrated module according to claim 1,
**characterized in that**
the integrated module (7) is stored in the memory of a plug-in card, wherein the plug-in card is connected to the payment terminal (1) with a releasable connection.

5. An integrated module according to claim 1,
**characterized in that**
additional functions can be loaded into the integrated module (7).

6. An integrated module according to claim 1 or 5,
**characterized in that**
the integrated module (7) contains an index of the functions and/or the additional functions.

7. An integrated module according to claim 1,
**characterized in that**
the functions include cryptographic functions for processing security-sensitive data.

8. A procedure for executing an application, more particularly a cash-less payment process in a payment terminal, wherein the payment terminal contains components, wherein each component can be assigned to a class of components, more particularly a class of card scanners, a class of keyboards, and a class of display units, wherein the payment terminal contains a terminal module, wherein protocols are executed in the payment terminal, and wherein the components are used during the execution of the protocols,
**characterized by** the following processing steps:
a) Sending of a prompt from the terminal module (6), which is designed as a software module, to an integrated module (7) to begin the execution of a protocol.
b) Exchanging information between the integrated module (7) and the components, wherein the information is exchanged between the integrated module (7) and the terminal module (6) and between the terminal module (6) and the components, wherein the information is exchanged between the integrated module (7) and the terminal module (6) via selected functions, which are stored in the integrated module (7), and wherein the selection of the functions depends on which one of the protocols is executed, and wherein the selection of the functions is independent of a specific design of the components, which are assigned to a class of components.

9. A procedure according to claim 8,
**characterized in that**
the terminal module (6) transmits the information exchanged between the integrated module (7) and the components without modifying it.

10. A procedure according to claim 8,
**characterized by** the further processing step:
d) Assigning a key to the information that is exchanged between the integrated module (7) and the components, wherein the terminal module (6) uses the key to determine with which of the components the integrated module (7) is exchanging the information with the key.

11. A procedure according to claim 8,
**characterized in that**
during the exchange of information between the integrated module (7) and the components, security-sensitive data is exchanged.

12. A procedure according to claim 8,
**characterized in that**
during the exchange of information between the integrated module (7) and the components, security-sensitive cryptographic functions are executed.

## Revendications

1. Module intégré pour un terminal de paiement, le terminal de paiement présentant des composants, chacun des composants étant susceptible d'être associé à une classe de composants, en particulier à une classe de lecteurs de cartes, à une classe de claviers et à une classe d'unités d'affichage, sachant que, en cas d'utilisation du terminal de paiement par un utilisateur, des protocoles peuvent se dérouler pour effectuer des applications du terminal de paiement et les composants étant utilisables dans le cadre du déroulement des protocoles,
**caractérisé en ce que**, lors du déroulement des protocoles, un échange d'information indirect peut être effectué entre le module intégré (7) et les composants, sachant que, pour effectuer l'échange d'information indirect, un échange d'information direct est effectué entre le module intégré (7) et un module terminal (6) disposé dans le terminal de paiement (1), qui est réalisé sous la forme de module logiciel et est réalisé entre le module terminal (6) et les composants,
**en ce que** l'échange d'information direct entre le module intégré (7) et le module terminal (6) peut être effectué à l'aide de fonctions sélectionnées, mémorisées dans le module intégré (7), sachant que la sélection des fonctions dépend du protocole qui se déroule, et la sélection des fonctions étant indépendante d'une configuration spécifique des composants associés à une classe de composants.

2. Module intégré selon la revendication 1, **caractérisé en ce qu'**un protocole permettant un paiement sans argent comptant peut être exécuté au moyen des fonctions.

3. Module intégré selon la revendication 1 ou 2, **caractérisé en ce que** les protocoles comprennent un protocole pour effectuer un processus de paiement au moyen d'un porte-monnaie électronique.

4. Module intégré selon la revendication 1, **caractérisé en ce que** le module intégré (7) est mémorisé dans une mémoire sur une carte enfichable, la carte enfichable étant reliée de façon désolidarisable au terminal de paiement (1).

5. Module intégré selon la revendication 1, **caractérisé en ce que** d'autres fonctions sont chargeables dans le module intégré (7).

6. Module intégré selon la revendication 1 ou 5, caractérisé en ce le module intégré (7) présente une liste des fonctions et/ou des autres fonctions.

7. Module intégré selon la revendication 1, **caractérisé en ce que** les fonctions comprennent des fonctions cryptographiques pour le traitement de données concernant la sécurité.

8. Procédé d'exécution d'une application, en particulier d'un processus de paiement sans argent comptant, dans un terminal de paiement, le terminal de paiement présentant des composants, chacun des composants pouvant être associé à une classe de composants, en particulier à une classe de lecteurs de cartes, à une classe de claviers et à une classe d'unités d'affichage, le terminal de paiement présentant un module terminal, sachant que, dans le module terminal, se déroulent des protocoles et les composants étant utilisés dans le cadre du déroulement des protocoles,
**caractérisé par** les étapes de procédé suivantes :
a) envoi d'une requête depuis le module terminal (6), réalisé sous la forme de module logiciel, à un module intégré (7), pour commencer l'exécution d'un protocole,
b) échange d'informations entre le module intégré (7) et les composants, les informations étant ici échangées entre le module intégré (7) et le module terminal (6) et entre le module terminal (6) et les composants, les informations étant échangées entre le module intégré (7) et le module terminal (6) à l'aide de fonctions sélectionnées, mémorisées dans le module intégré (7), et la sélection des fonctions dépendant de celui des protocoles qui se déroule, et la sélection des fonctions étant indépendante d'une configuration spécifique des composants ayant été associés à une classe de composants.

9. Procédé selon la revendication 8, **caractérisé en ce que** le module terminal (6) transmet, sans modification, les informations échangées entre le module intégré (7) et les composants.

10. Procédé selon la revendication 8, **caractérisé par** l'étape de procédé supplémentaire :
d) attribution d'une identification à l'information qui est échangée entre le module intégré (7) et les composants, le module terminal (6) déterminant, à l'aide de l'identification, avec lequel des composants le module intégré (7) échange l'information munie d'une identification.

11. Procédé selon la revendication 8, **caractérisé en ce qu'**un échange de données concernant la sécurité est effectué lors de l'échange des informations entre le module intégré (7) et les composants.

12. Procédé selon la revendication 8, **caractérisé en ce que** des fonctions cryptographiques concernant la sécurité sont exécutées dans le cadre de l'échange des informations entre le module intégré (7) et les composants.
